# EUROPEAN PATENT SPECIFICATION

(11) **EP 2 807 642 B1**
(45) Date of publication and mention of the grant of the patent: **19.06.2019**
(21) Application number: 13700898.3
(22) Date of filing: 17.01.2013
(51) Int. Cl.: G08G 1/16, B60R 11/04

(54) **METHOD FOR OPERATING A DRIVER ASSISTANCE DEVICE OF A MOTOR VEHICLE, DRIVER ASSISTANCE DEVICE AND MOTOR VEHICLE**
VERFAHREN ZUM BETREIBEN EINER FAHRERASSISTENZVORRICHTUNG EINES KRAFTFAHRZEUGS, FAHRERASSISTENZVORRICHTUNG UND KRAFTFAHRZEUG
PROCÉDÉ DE FONCTIONNEMENT DE DISPOSITIF D'ASSISTANCE AU CONDUCTEUR DE VÉHICULE MOTORISÉ, DISPOSITIF D'ASSISTANCE AU CONDUCTEUR ET VÉHICULE MOTORISÉ

(30) Priority: 26.01.2012 DE 102012001554
(43) Date of publication of application: 03.12.2014
(73) Proprietor: Connaught Electronics Ltd., Tuam, County Galway (IE)
(72) Inventor: HUGHES, Ciaran, Kinvara, County Galway (IE); FINN, Sean, Galway City, County Galway (IE)
(74) Representative: Jauregui Urbahn, Kristian
(86) International application number: PCT/EP2013/050847
(87) International publication number: WO 2013/110541

(56) References cited:
- WO-A1-2005/013235
- GB-A- 2 463 544
- US-A1- 2010 289 632
- MAGORI V: "Ultrasonic sensors in air", ULTRASONICS SYMPOSIUM, 1994. PROCEEDINGS., 1994 IEEE CANNES, FRANCE 1-4 NOV. 1994, NEW YORK, NY, USA,IEEE, US, 31 October 1994 (1994-10-31), pages 471-481vol.1, XP032084406, DOI: 10.1109/ULTSYM.1994.401632 ISBN: 978-0-7803-2012-3

## Description

The invention relates to a method for operating a driver assistance device in a motor vehicle. An image of an environmental region of the motor vehicle is captured by means of a camera of the driver assistance device. In addition, sensor data is captured to the environmental region by means of a sensor different from the camera. In addition, the invention relates to a driver assistance device for performing such a method as well as to a motor vehicle with such a driver assistance device.

Driver assistance devices are already known from the prior art in diverse configuration. Thus, camera systems are known on the one hand, which have a plurality of video cameras attached to the motor vehicle, the images of which can be displayed on a display in the motor vehicle. The images of the cameras can also be subjected to image processing, and additional functionalities can be provided based on the images. For example, based on the images, object identification is effected such that the camera system can serve as a collision warning system. On the other hand, systems are also known, which are formed for measuring distances between the motor vehicle and the obstacles located in its environment. Here, for example ultrasonic sensors are meant, which can be disposed distributed on the front and the rear bumper of the motor vehicle. Each ultrasonic sensor then has its own capturing range, which represents a partial segment of a common capturing range of the entire ultrasonic sensor system. Thus, each ultrasonic sensor measures the distances in its own capturing range.

It is also already prior art to combine a camera system with a sensor system in a motor vehicle. Such a sensor fusion is for example known from the document GB 2463544 A. Here, a plurality of ultrasonic sensors is employed, which are for example attached to a bumper. The environmental region of the motor vehicle detected by the ultrasonic sensors is additionally imaged by means of a camera. A computing device processes the sensor data of the ultrasonic sensors as well as the images of the camera at the same time. On the one hand, the images are displayed on a display in the motor vehicle; on the other hand, it is examined by means of the computing device if a detected object approaches the motor vehicle. As the case may be, a warning signal is then output.

In the prior art, thus, the sensor fusion is effected such that all information of different sensor systems - namely of the camera on the one hand and the ultrasonic sensors on the other hand - is collected and processed at the same time in a common computing device.

It is the object of the invention to demonstrate a solution how in a method of the initially mentioned kind the images of the camera on the one hand and the sensor data of the sensor on the other hand can be better combined with each other than in the prior art.

According to the invention, this object is solved by a method defined by claim 1.

The invention is defined by the appended claims.

Thus, the effect according to the invention is achieved in that the computing device identifies the object external to vehicle in the image not or not only based on the image data, but (also) based on the sensor data of the at least one sensor. Therein, the invention is based on the realization that with the aid of the detection algorithms known from the prior art, which serve for detecting objects based on images, it is not always possible to identify the object in the captured image. Namely, object identification solely based on the image data is not possible or only in restricted manner in particular in a near range of up to about 0.5 m from the motor vehicle. It can occur that an object located in this near range is depicted in the captured images, but cannot be identified solely based on the images. Now, the invention takes the way to use the sensor data of the sensor for identifying the object in the captured image. For example, this can be configured such that, if the object cannot be identified based on the image data, the same object is identified solely based on the sensor data. By contrast, if the object is identified both based on the sensor data and based on the image, thus, the identification of the object in the image can be effected both depending on the sensor data and depending on the image data. Overall, thus, the sensor fusion is improved compared to the prior art, and the accuracy and reliability of the object identification in the image of the camera are increased.

The identification of the object in the image can for example be effected such that at least one region of the object depicted in the image is surrounded by a bounding box. Such an approach to label an object identified based on image data in the image by means of a bounding box is already known for example from the printed matter JP 2011/119917 A. In this embodiment, however, it is also proposed to generate such a bounding box not or not only based on the image data of the camera, but additionally or alternatively also based on the sensor data of the sensor. This embodiment exploits the fact that a sensor operating according to the echo propagation time method has a certain detection range and measures the distances only in this detection range. In particular with ultrasonic sensors, this detection range is relatively narrow such that with the presence of a plurality of sensors with good accuracy, the position of the object relative to the motor vehicle and therefore also the position of the object in the captured image can be determined, too. The bounding box generated based on the sensor data can for example have a width in the image of the camera, which corresponds to the width of the detection range of the sensor. Such a camera image with the bounding box can then be used in very different manners: on the one hand, this image can be displayed on a display in the motor vehicle such that the driver is informed about the detected object. On the other hand, this image with the bounding box can also be transmitted to other driver assistance systems in the motor vehicle and these other systems can use the image for providing different functionalities in the motor vehicle. Such a system can for example be the collision warning system, which is able to generate a warning signal for warning the driver based on the image.

In an embodiment it is provided that the object is identified in the image both based on the sensor data of the sensor and based on the image of the camera by means of a computing device. This is in particular provided if the object identification is possible both based on the sensor data and based on the image data of the camera, thus if the object is located in an overlapping region between the detection range of the sensor as well as an image analysis range, in which the object identification is also possible based on the image data. This embodiment has the advantage that the object external to vehicle can be identified particularly reliably and extremely exactly in the image of the camera. Namely, this embodiment combines the advantages of the object identification based on the image data on the one hand with the advantages of the object identification based on the sensor data on the other hand such that the respective disadvantages of the two object identification methods can be avoided.

For example, this can be effected such that in the image a first bounding box is generated based on the sensor data of the sensor, while a second bounding box is generated based on the image of the camera (thus by means of image processing). Then, the two bounding boxes can be merged to a common bounding box. Thus, the generation of the bounding box in the image of the camera is particularly precise.

Particularly preferred, the identification of the object involves that a width of the object in the image is determined based on the image of the camera, while the position of a lower end of the object in the image is determined based on the sensor data of the sensor. This embodiment is based on the realization that both the object identification based on the image data and the identification based on the sensor data have "weak points". Thus, in the object identification based on the image data, the exact determination of the lower end in the image is not possible or only in restricted manner due to the used detection algorithms (optical flow, ego-motion compensation method). With these detection algorithms, for example, the feet of pedestrians can only inexactly be detected. On the other hand, the determination of the width of the object in the image is only possible with restricted accuracy based on the sensor data of the sensor. For this reason, presently it is proposed to use the image data of the camera for determining the width of the object in the image and to use the sensor data of the sensor for determining the position of a lower end of the object in the image. The respective disadvantages of the identification methods - based on the image data on the one hand and based on the sensor data on the other hand - can therefore be avoided, and the object identification can be particularly precisely effected.

The latter embodiment can for example be realized such that the merging of the two bounding boxes in performed in a very specific manner: for the common bounding box, the width of the second bounding box (based on the camera data) as well as the position of a lower edge of the first bounding box in the image (based on the sensor data) can be adopted. The common bounding box thus has the width of the bounding box generated based on the image data, and the position of the lower edge of the common bounding box corresponds to the position of the bounding box generated based on the sensor data. The common bounding box thus particularly precisely reflects the actual position of the object in the image.

As already explained, it can occur that the object is within the detection range of the sensor, but outside of an image analysis range, in which the identification of the object based on the image data is possible at all. In such a case, the same object is preferably identified in the image solely based on the sensor data of the sensor. The deficiencies of the object identification based on the sensor data is accepted in this embodiment. However, this embodiment allows that even in absence of object identification based on the image data, the object external to vehicle nevertheless can be identified in the image of the camera.

By contrast, if the object is outside of the detection range of the sensor, the same object is identified in the image solely based on the image of the camera. Thus, if the object cannot be identified based on the sensor data, solely the image data of the camera is used for object identification. This is in particular the case if the object is relatively far from the motor vehicle, namely in a distance of greater than for example 2.2 m. Namely, in such a distance, the object can no longer be detected with the aid of the sensor, and the object identification can be performed solely based on the image data.

An ultrasonic sensor is preferred, which is used for capturing the sensor data to the environmental region of the motor vehicle. Overall, a plurality of ultrasonic sensors can be used, which can be disposed distributed on the front bumper and/or on the rear bumper of the motor vehicle. Each ultrasonic sensor then has its own detection range, and the individual detection ranges can be next to each other - optionally also overlapping. However, the invention is not restricted to an ultrasonic sensor. Other sensors can also be employed, which are different from the camera. In particular, the at least one sensor is such one, which operates according to the echo propagation time method, thus a distance sensor, in which the distances are measured by measuring the propagation time of the transmit signal.

The invention also relates to a driver assistance device for a motor vehicle, which is formed for performing a method according to the invention.

A motor vehicle according to the invention has a driver assistance device according to the invention.

The preferred embodiments presented with respect to the method according to the invention and the advantages thereof correspondingly apply to the driver assistance device according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:
- Fig. 1: in schematic illustration a plan view of a motor vehicle according to an embodiment of the invention;
- Fig. 2: in schematic illustration an image of a camera, wherein detection ranges of sensors are illustrated in the image;
- Fig. 3: in schematic illustration the image according to Fig. 2, wherein the generation of a bounding box based on sensor data is explained in more detail;
- Fig. 4: the image with the bounding box, which is generated solely based on the sensor data;
- Fig. 5: the image with a bounding box, which is generated solely based on the image (thus the image data);
- Fig. 6: the image with the two bounding boxes;
- Fig. 7: in enlarged illustration the two bounding boxes;
- Fig. 8: a section of the image with a common bounding box, which is generated from the two mentioned bounding boxes; and
- Fig. 9: in schematic illustration the motor vehicle, wherein a method according to an embodiment of the invention is explained in more detail.

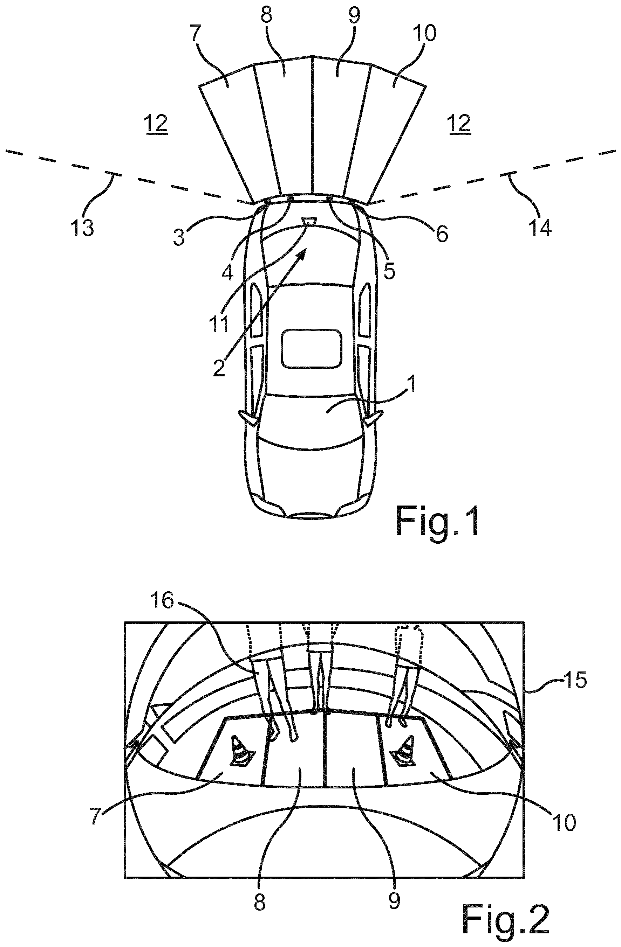

A motor vehicle 1 illustrated in Fig. 1 according to an embodiment of the invention is a passenger car. The motor vehicle 1 includes a driver assistance device 2, which serves for assisting the driver in driving the motor vehicle 1. The driver assistance device 2 has a plurality of ultrasonic sensors 3, 4, 5, 6, which are disposed distributed on a rear bumper of the motor vehicle 1 in the embodiment. In the embodiment, four ultrasonic sensors 3 to 6 are provided in total. The number as well as the arrangement of the ultrasonic sensors 3 to 6 is only exemplarily illustrated in the example according to Fig. 1; the number and the arrangement of the ultrasonic sensors 3 to 6 can be different according to embodiment. Thus, the ultrasonic sensors 3 to 6 can also be disposed on a front bumper of the motor vehicle 1. The configuration of the sensors 3 to 6 as ultrasonic sensors is also exemplary here. Other sensors can also be employed, which can measure distances between the motor vehicle 1 and the obstacles located in its environment. For example, radar devices or else optical distance sensors can also be used.

Each ultrasonic sensor 3 to 6 has a detection range 7, 8, 9, 10, in which the respective ultrasonic sensor 3 to 6 can measure the distances. If for example an object external to vehicle is in the detection range 7 of the ultrasonic sensor 3, thus, the ultrasonic sensor 3 can detect the distance of this object from the motor vehicle 1. The detection ranges 7 to 10 are closely next to each other and immediately adjoin each other. The detection ranges 7 to 10 thus cover a relatively large environmental region behind the motor vehicle 1 such that the individual detection ranges 7 to 10 each represent a partial segment of the environmental region behind the motor vehicle 1. Therein, the respective detection ranges 7 to 10 are relatively narrow segments, which are next to each other in vehicle transverse direction and are configured elongated in vehicle longitudinal direction.

In addition, the driver assistance device 2 has a camera 11, which is disposed in the rear region of the motor vehicle 1 similar to the ultrasonic sensors 3 to 6 and images an environmental region 12 behind the motor vehicle 1. The environmental region 12 imaged with the camera 11 also includes the detection ranges 7 to 10 of the ultrasonic sensors 3 to 6 such that the detection ranges 7 to 10 are within the imaged environmental region 12.

The camera 11 is a video camera, which is able to provide a plurality of frames per second or a temporal sequence of images. The camera 11 has a relatively large capturing angle or aperture angle, which even can be in a range of values from 120° to 190°. This angle is bounded by two lines 13, 14 in Fig. 1, namely such that the imaged environmental region 12 behind the motor vehicle 1 is also bounded by the bounding lines 13, 14. The camera 11 can for example be the so-called fish eye camera.

Both the ultrasonic sensors 3 to 6 and the camera 11 are electrically connected to an electronic computing device not illustrated in more detail in the figures, which can for example include a digital signal processor and a memory. Thus, the computing device receives the sensor data of the ultrasonic sensors 3 to 6 on the one hand and also the images - thus the image data - of the camera 11 on the other hand.

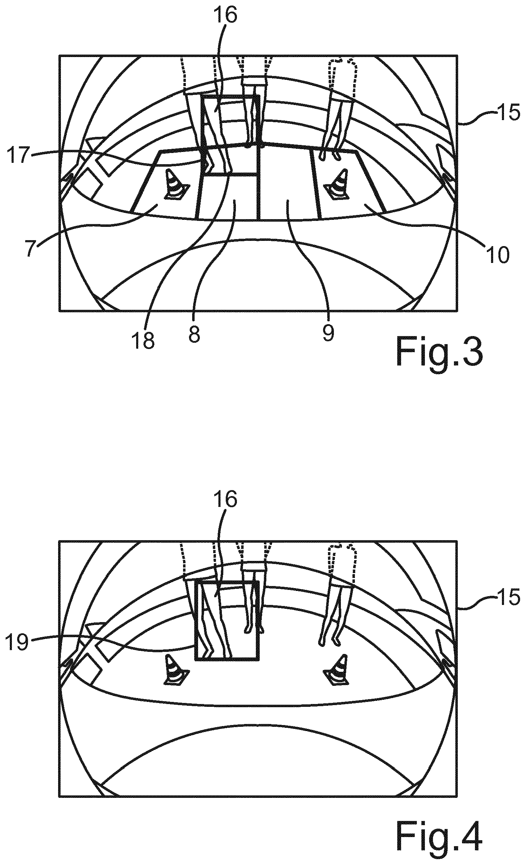

An exemplary image 15 of the camera 11, in which the environmental region 12 is depicted, is illustrated in Fig. 2. Because the coordinates of the ultrasonic sensors 3 to 6 and of the camera 11 in the coordinate system of the motor vehicle 1 and in the coordinate system of the camera 11, respectively, are known in the computing device, the positions of the detection ranges 7 to 10 in the image 15 are also known, as is schematically illustrated in Fig. 2. If an object 16 (here a pedestrian) exists within the detection range 7 to 10 of one of the ultrasonic sensors 3 to 6 (exemplarily in the detection range 8 of the ultrasonic sensor 4 in Fig. 2), a region 17 can be defined in the image 15, in which the imaged object 16 is located in the image 15. This is possible because the position of the detection ranges 7 to 10 in the image 15 of the camera 11 is known in the computing device. If the object 16 is detected by means of the ultrasonic sensor 4 (if this ultrasonic sensor 4 provides a measured distance), it can be assumed as sure that the object 16 is actually located in the detection range 8 of the ultrasonic sensor 4. The defined region 17, in which the object 16 is located, can have the same width in the image 15 as the detection range 8 of the ultrasonic sensor 4. Because the distances to the object 16 can be particularly precisely measured by means of the ultrasonic sensor 3 to 6, the position of a lower end 18 of the object 16 in the image 15 can be determined based on the measured distance. In the embodiment according to Fig. 3, the lower end 18 corresponds to a foot of the pedestrian. On the other hand, it is not readily possible to determine the width of the object 16 in the image 15 solely based on the sensor data of the ultrasonic sensors 3 to 6. Therefore, the region 17 is defined with such a width, which corresponds to the width of the detection range 8.

Solely based on the sensor data of the ultrasonic sensors 3 to 6, thus, a first bounding box 19 can be generated in the image 15, which is illustrated in Fig. 4 and corresponds to the region 17 according to Fig. 3. The imagined detection ranges 7 to 10 of the ultrasonic sensors 3 to 6 are not illustrated in Fig. 4 anymore. Thus, an image 15 according to Fig. 4 is available, in which the object 16 is surrounded by means of the bounding box 19. Therefore, the object identification is here effected solely based on the sensor data of the ultrasonic sensors 3 to 6. In order to generate the first bounding box 19, namely, a special image processing of the image 15 is not required.

This type of object identification, which is performed solely based on the sensor data of the ultrasonic sensors 3 to 6, is for example provided if the computing device is not capable of identifying the object 16 in the image 15 solely based on the image processing of the image data due to the low distance of the object 16. If the optical object identification does not provide results, thus, the object 16 in the image 15 is detected - as shown above - solely based on the sensor data of the ultrasonic sensors 3 to 6. Such an image 15 according to Fig. 4 can then for example be displayed on a display in the motor vehicle 1 or else be forwarded to further assistance systems.

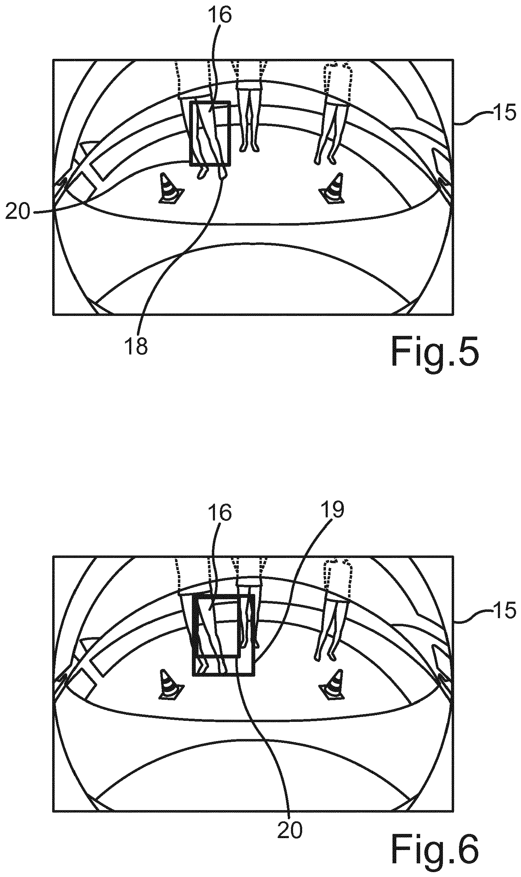

By contrast, if the detection of the object 16 based on the camera data is possible, thus, the image processing algorithms known from the prior art can also be used, which serve for detecting the object in 16 in the image 15. Such detection algorithms also provide a bounding box 20 (second bounding box) as it is illustrated in more detail in Fig. 5. The image 15 according to Fig. 5 is therefore the result of a detection algorithm, by which the object 16 is identified. As is apparent from Fig. 5, the actual width of the object 16 is better reflected with the second bounding box 20 than with the first bounding box 19 (see Fig. 4). However, a disadvantage in the object identification based on the image data is in that the base of the object 16 - thus the lower end 18 (here the feet) - cannot be uniquely identified by the computing device. Namely for the reason that usually the so-called "optical flow" is used as the detection algorithm, which includes the ego-motion compensation. This algorithm outputs the image 15 with the bounding box 20, wherein the lower edge of the bounding box 20 in the image 15 does not always correspond to the position of the lower end 18 in the image 15.

If the object identification based on the sensor data of the ultrasonic sensors 3 to 6 is not possible, thus, the detection of the object 16 is effected solely based on the image 15, thus solely based on the camera data. The result of this object identification is illustrated in Fig. 5.

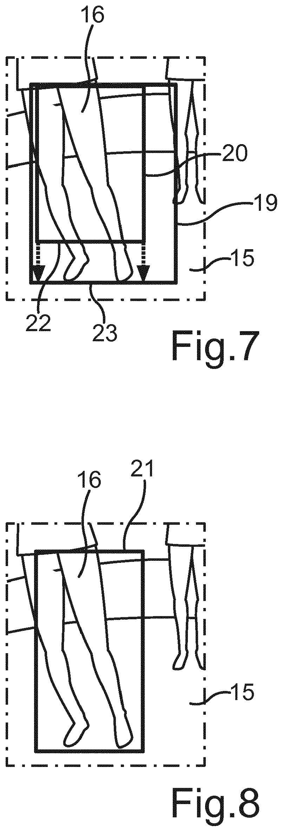

It can also occur that the object 16 in the image 15 can be identified both based on the sensor data of the ultrasonic sensors 3 to 6 and based on the image data of the camera 11. As is illustrated in Fig. 6, thus, two bounding boxes 19, 20 are generated, namely the first bounding box 19 based on the sensor data and the second bounding box 20 based on the image processing. From the two bounding boxes 19, 20, now, a common bounding box 21 can be generated (see Fig. 8). The generation of the common bounding box 21 is effected such that the width of the second bounding box 20 on the one hand and the position of the lower edge of the first bounding box 19 on the other hand are adopted. With reference to Fig. 7, in the computing device, the second bounding box 20 is taken and expanded in its height such that a lower edge 22 of the second bounding box 20 coincides with a lower edge 23 of the first bounding box 19. Thus, the height of the second bounding box 20 is increased by displacing the lower edge 22 in the image 15 downwards until this edge 22 reaches the lower edge 23. Therein, the upper edge of the bounding box 20 remains unchanged. Such an altered bounding box 20 then corresponds to the common bounding box 21 according to Fig. 8, which was generated based on the two bounding boxes 19, 20. Thus, the bounding box 21 according to Fig. 8 represents the result of the object identification both based on the image data and based on the sensor data.

As already explained, different situations can occur:
- The object identification can be possible exclusively based on the sensor data;
- the object identification can be possible exclusively based on the image data; and
- both types of object identification can be possible (common bounding box 21).

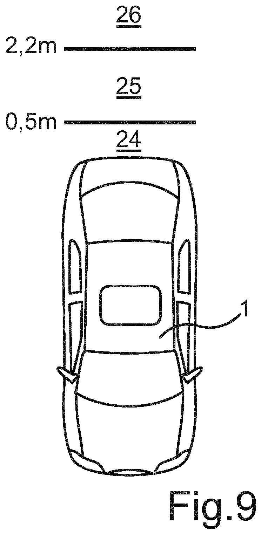

Usually, this will depend on in which distance the object 16 is located from the motor vehicle 1. With reference to Fig. 9, three different regions 24, 25, 26 can be defined in total, which are each in different distances from the vehicle tail. Therein, the first region 24 extends for example up to a distance of 0.5 m from the motor vehicle 1. The second region 25 for example extends from 0.5 m to 2.2 m from the motor vehicle 1. The third region 26 extends from 2.2 m from the motor vehicle 1. In the first region 24, basically, object identification is only possible based on the sensor data. By contrast, in the second region 25, the object identification is possible both based on the image data and based on the sensor data. Finally, in the third region 26, identification is exclusively possible based on the camera data. If the object 16 is in the first region 24, thus, the first bounding box 19 can be generated within the scope of the identification of the object 16. However, if the object 16 is in the region 25, thus, the common bounding box 21 can be generated from the bounding boxes 19, 20. Finally, if the object 16 is in the third region 26, thus, only the second bounding box 20 is generated.

Thus, at the end, an image 15 with a bounding box 19, 20 or 21 is available. This image 15 can now be displayed on a display. Additionally or alternatively, this image 15 can also be further processed in order to be able to provide further functionalities in the motor vehicle 1, namely for example the functionality of warning the driver.

## Claims

1. Method for operating a driver assistance device (2) in a motor vehicle (1) by
- capturing an image (15) of an environmental region (12) of the motor vehicle (1) by means of a camera (11) of the driver assistance device (2), and
- capturing sensor data to the environmental region (12) by means of ultrasonic sensors (3 to 6) with an individual detection range (7 to 10) covering partial segment of the environmental region (12),
**characterized in that**
an object (16) located in the environmental region (12) is identified in the image (15) by means of an electronic computing device of the driver assistance device (2), and the sensor data of the sensors (3 to 6) is used for identifying the object (16) in the image (15), wherein
the identification of the object (16) in the image (15) includes that at least one region of the object (16) depicted in the image (15) is surrounded by a bounding box (19, 20, 21) and the object (16) is identified in the image (15) both based on the sensor data of the sensors (3 to 6) and based on the image (15) of the camera (11) by means of the computing device while
in the image (15) a first bounding box (19) is generated based on the sensor data of the sensors (3 to 6) as well as a second bounding box (20) is generated based on the image (15) of the camera (11) and the two bounding boxes (19, 20) are combined to a common bounding box (21).

2. Method according to claim 1 **characterized in that**
the identification of the object (16) includes that a width of the object (16) is determined based on the image (15) of the camera (11) and the position of a lower end (18) of the object (16) is determined in the image (15) based on the sensor data of the sensors (3 to 6).

3. Method according to claim 1 **characterized in that**
the combination of the two bounding boxes (19, 20) includes that the width of the second bounding box (20) and the position of a lower edge (23) of the first bounding box (19) in the image (15) are used for the common bounding box (21).

4. Method according to anyone of the preceding claims,
**characterized in that**
if the object (16) is within a detection range (7 to 10) of the sensor (3 to 6), to which the sensor data is captured, and outside of an image analysis range (25, 26), in which the identification of the object (16) based on the image (15) is possible, the same object (16) is identified in the image (15) solely based on the sensor data of the sensors (3 to 6).

5. Method according to anyone of the preceding claims,
**characterized in that**
if the object (16) is outside of a detection range (7 to 10) of the sensors (3 to 6), the same object (16) is identified in the image (15) solely based on the image (15) of the camera (11).

6. Method according to anyone of the preceding claims,
**characterized in that**
an ultrasonic sensor is used as the sensors (3 to 6).

7. Driver assistance device (2) for a motor vehicle (1), including at least one camera (11) for capturing images (15) of an environmental region (12) of the motor vehicle (1), including ultrasonic sensors (3 to 6) with an individual detection range (7 to 10) covering partial segment of the environmental region (12) for capturing sensor data to the environmental region (12), and including an electronic computing device for processing the images (15) and the sensor data,
**characterized in that**
the computing device is arranged to perform a method according to anyone of the preceding claims.

8. Motor vehicle (1) including a driver assistance device (2) according to claim 7.

## Patentansprüche

1. Verfahren zum Betreiben einer Fahrerassistenzvorrichtung (2) in einem Kraftfahrzeug (1) durch
- Aufnehmen eines Bilds (15) eines Umgebungsbereichs (12) des Kraftfahrzeugs (1) mittels einer Kamera (11) der Fahrerassistenzvorrichtung (2), und
- Aufnehmen von Sensordaten über den Umgebungsbereich (12) mittels Ultraschallsensoren (3 bis 6) mit einem individuellen Detektionsbereich (7 bis 10), der ein Teilsegment des Umgebungsbereichs (12) abdeckt,
**dadurch gekennzeichnet, dass**
ein Objekt (16), das in dem Umgebungsbereich (12) lokalisiert ist, mittels einer elektronischen Datenverarbeitungsvorrichtung der Fahrerassistenzvorrichtung (2) in dem Bild (15) identifiziert wird, und die Sensordaten der Sensoren (3 bis 6) zum Identifizieren des Objekts (16) in dem Bild (15) verwendet werden, wobei
die Identifikation des Objekts (16) in dem Bild (15) umfasst, dass mindestens ein Bereich des Objekts (16), das in dem Bild (15) dargestellt wird, von einen Begrenzungsrahmen (19, 20, 21) umgeben ist und das Objekt (16) in dem Bild (15) sowohl auf der Grundlage der Sensordaten der Sensoren (3 bis 6) als auch auf der Grundlage des Bilds (15) der Kamera (11) mittels der Datenverarbeitungsvorrichtung identifiziert wird, während
in dem Bild (15) ein erster Begrenzungsrahmen (19) auf der Grundlage der Sensordaten der Sensoren (3 bis 6) erzeugt wird sowie ein zweiter Begrenzungsrahmen (20) auf der Grundlage des Bilds (15) der Kamera (11) erzeugt wird und die beiden Begrenzungsrahmen (19, 20) zu einem gemeinsamen Begrenzungsrahmen (21) kombiniert werden.

2. Verfahren nach Anspruch 1,
**dadurch gekennzeichnet, dass**
die Identifikation des Objekts (16) umfasst, dass eine Breite des Objekts (16) auf der Grundlage des Bilds (15) der Kamera (11) bestimmt wird und die Position eines unteren Endes (18) des Objekts (16) in dem Bild (15) auf der Grundlage der Sensordaten der Sensoren (3 bis 6) bestimmt wird.

3. Verfahren nach Anspruch 1,
**dadurch gekennzeichnet, dass**
die Kombination aus den beiden Begrenzungsrahmen (19, 20) umfasst, dass die Breite des zweiten Begrenzungsrahmens (20) und die Position eines unteren Rands (23) des ersten Begrenzungsrahmens (19) in dem Bild (15) für den gemeinsamen Begrenzungsrahmen (21) verwendet werden.

4. Verfahren nach einem der vorhergehenden Ansprüche, **dadurch gekennzeichnet, dass**
wenn das Objekt (16) innerhalb eines Detektionsbereichs (7 bis 10) des Sensors (3 bis 6) ist, in dem die Sensordaten aufgenommen werden, und außerhalb eines Bildanalysebereichs (25, 26) ist, in dem die Identifikation des Objekts (16) auf der Grundlage des Bilds (15) möglich ist, das gleiche Objekt (16) allein auf der Grundlage der Sensordaten der Sensoren (3 bis 6) in dem Bild (15) identifiziert wird.

5. Verfahren nach einem der vorhergehenden Ansprüche, **dadurch gekennzeichnet, dass**
wenn das Objekt (16) außerhalb eines Detektionsbereichs (7 bis 10) der Sensoren (3 bis 6) ist, das gleiche Objekt (16) allein auf der Grundlage des Bilds (15) der Kamera (11) in dem Bild (15) identifiziert wird.

6. Verfahren nach einem der vorhergehenden Ansprüche, **dadurch gekennzeichnet, dass**
ein Ultraschallsensor als die Sensoren (3 bis 6) verwendet wird.

7. Fahrerassistenzvorrichtung (2) für ein Kraftfahrzeug (1), mindestens eine Kamera (11) zum Aufnehmen von Bildern (15) eines Umgebungsbereichs (12) des Kraftfahrzeugs (1) umfassend, Ultraschallsensoren (3 bis 6) mit einem individuellen Detektionsbereich (7 bis 10), der ein Teilsegment des Umgebungsbereichs (12) abdeckt, zum Aufnehmen von Sensordaten über den Umgebungsbereich (12) umfassend und eine elektronische Datenverarbeitungsvorrichtung zum Verarbeiten der Bilder (15) und der Sensordaten umfassend,
**dadurch gekennzeichnet, dass**
die Datenverarbeitungsvorrichtung eingerichtet ist, ein Verfahren nach einem der vorhergehenden Ansprüche durchzuführen.

8. Kraftfahrzeug (1), eine Fahrerassistenzvorrichtung (2) nach Anspruch 7 umfassend.

## Revendications

1. Procédé pour faire fonctionner un dispositif d'aide à la conduite (2) dans un véhicule à moteur (1) en :
- capturant une image (15) d'une région environnementale (12) du véhicule à moteur (1) au moyen d'une caméra (11) du dispositif d'aide à la conduite (2), et
- capturant des données de capteur dans la région environnementale (12) au moyen de capteurs à ultrasons (3 à 6) avec une plage de détection individuelle (7 à 10) couvrant un segment partiel de la région environnementale (12),
**caractérisé en ce que**
un objet (16) situé dans la région environnementale (12) est identifié dans l'image (15) au moyen d'un dispositif électronique de calcul du dispositif d'aide à la conduite (2), et les données de capteur des capteurs (3 à 6) sont utilisées pour identifier l'objet (16) dans l'image (15), où
l'identification de l'objet (16) dans l'image (15) comprend qu'au moins une région de l'objet (16) représentée dans l'image (15) qui est entourée par une boîte de délimitation (19, 20, 21), et l'objet (16) est identifié dans l'image (15) à la fois sur la base des données de capteur des capteurs (3 à 6) et sur la base de l'image (15) de la caméra (11) au moyen du dispositif de calcul, tandis que
dans l'image (15), une première boîte de délimitation (19) est générée sur la base des données de capteur des capteurs (3 à 6), et une seconde boîte de délimitation (20) est générée sur la base de l'image (15) de la caméra (11), et les deux boîtes de délimitation (19, 20) sont combinées en une boîte de délimitation commune (21) .

2. Procédé selon la revendication 1,
**caractérisé en ce que** :
l'identification de l'objet (16) comprend qu'une largeur de l'objet (16) est déterminée sur la base de l'image (15) de la caméra (11) et la position d'une extrémité inférieure (18) de l'objet (16) est déterminée dans l'image (15) sur la base des données de capteur des capteurs (3 à 6).

3. Procédé selon la revendication 1,
**caractérisé en ce que** :
la combinaison des deux boîtes de délimitation (19, 20) comprend que la largeur de la seconde boîte de délimitation (20) et la position d'un bord inférieur (23) de la première boîte de délimitation (19) dans l'image (15) sont utilisées pour la boîte de délimitation commune (21).

4. Procédé selon l'une quelconque des revendications précédentes,
**caractérisé en ce que** :
si l'objet (16) se situe dans une plage de détection (7 à 10) du capteur (3 à 6), dans laquelle les données de capteur sont capturées, et en dehors d'une plage d'analyse d'image (25, 26), dans laquelle l'identification de l'objet (16) sur la base de l'image (15) est possible, le même objet (16) est identifié dans l'image (15) uniquement sur la base des données de capteur des capteurs (3 à 6).

5. Procédé selon l'une quelconque des revendications précédentes,
**caractérisé en ce que** :
si l'objet (16) se situe en dehors d'une plage de détection (7 à 10) des capteurs (3 à 6), le même objet (16) est identifié dans l'image (15) uniquement sur la base de l'image (15) de la caméra (11).

6. Procédé selon l'une quelconque des revendications précédentes,
**caractérisé en ce que** :
un capteur à ultrasons est utilisé pour les capteurs (3 à 6).

7. Dispositif d'aide à la conduite (2) pour un véhicule à moteur (1), comprenant au moins une caméra (11) pour capturer des images (15) d'une région environnementale (12) du véhicule à moteur (1), comprenant des capteurs à ultrasons (3 à 6) ayant une plage de détection individuelle (7 à 10) couvrant un segment partiel de la région environnementale (12) pour capturer des données de capteur dans la région environnementale (12), et comprenant un dispositif électronique de calcul pour traiter les images (15) et les données de capteur,
**caractérisé en ce que** :
le dispositif de calcul est agencé pour exécuter un procédé selon l'une quelconque des revendications précédentes.

8. Véhicule à moteur (1) comprenant un dispositif d'aide à la conduite (2) selon la revendication 7.
